# EUROPEAN PATENT APPLICATION

(11) **EP 4 685 971 A1**
(43) Date of publication of application: **28.01.2026**
(21) Application number: 24803767.3
(22) Date of filing: 10.05.2024
(51) Int. Cl.: H01M 50/383, H01M 10/658, H01M 50/211, H01M 10/04, H01M 50/249

(54) **BATTERY MODULE WITH IMPROVED VENTING STRUCTURE**

(30) Priority: 10.05.2023 KR 20230060414
(71) Applicant: LG Energy Solution, Ltd., Seoul 07335 (KR)
(72) Inventor: HAN, Seungwon, Daejeon 34122 (KR)
(74) Representative: Plasseraud IP
(86) International application number: PCT/KR2024/006333
(87) International publication number: WO 2024/232714

(57) **Abstract**

The present invention provides a structure of a battery module containing a battery cell laminate comprising a plurality of pouch-type battery cells and a plurality of compressible pads stacked therein in widthwise direction, wherein each of the plurality of pouch-type battery cells is provided with a terrace portion at each of two lengthwise ends thereof, the terrace portion being thinner than other portions thereof, and each of the plurality of compressible pads is provided with a packing portion at each of two lengthwise ends thereof, the packing portion protruding in one side or two sides of the widthwise direction and being in contact with the terrace portion in the widthwise direction.

## Description

### [TECHNICAL FIELD]

This application claims the benefit of priority based on Korean Patent Application No. 10-2023-0060414 filed on May 10, 2023, entire content disclosed in the document of the patent applications is included as a part of this specification.

The present invention relates to a structure of a battery module manufactured by stacking a plurality of pouch-type battery cells with an improved venting structure.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

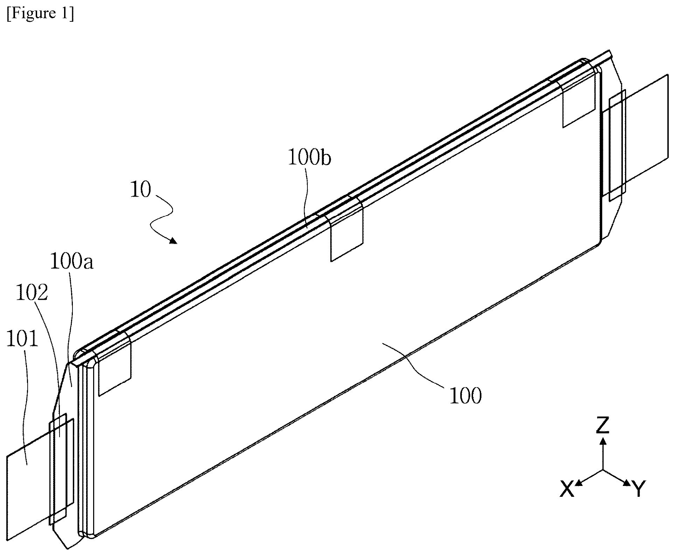

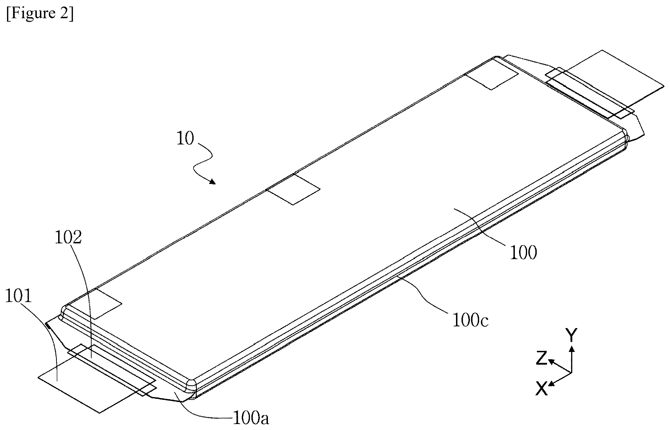

FIGS. 1 and 2 illustrate the structure of a pouch-type battery cell. Referring to FIGS. 1 and 2, the battery cell 10 may include an electrode assembly, a pouch 100 accommodating the electrode assembly, and an electrode lead 101 extending from the electrode assembly and protruding outward from the pouch 100. The electrode lead 101 may include a lead film 102 covering two thicknesswise end surfaces thereof.

The pouch 100 may be manufactured by folding a pouch sheet made of metal foil material to surround the electrode assembly and fusion-sealing the three sides except for the folded portion 100c. Accordingly, the pouch 100 may include a sealed portion 100b provided on the opposite side of the folded portion 100c, and a terrace portion 100a, which is thinner than the other portions, provided at each of the two lengthwise ends. The pouch sheet may be sealed with the lead film 102 interposed between the electrode leads 101 at the terrace portion 100a.

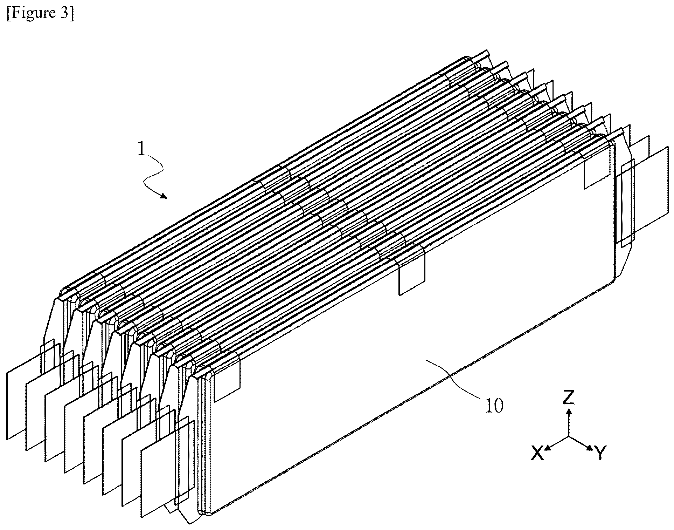

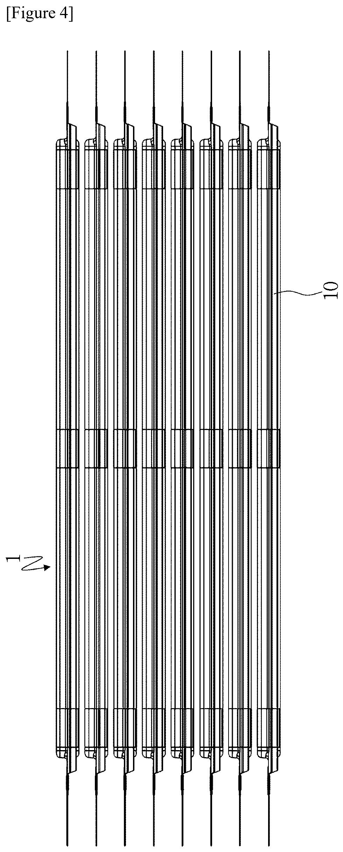

FIGS. 3 and 4 illustrate the structure of a battery cell laminate with battery cells stacked therein. Referring to FIGS. 3 and 4, a plurality of battery cells 10 may be connected in series and/or parallel to form a battery module to increase capacity and/or voltage. The battery module may include a battery cell laminate 1 in which a plurality of battery cells 10 are stacked in thicknesswise direction (widthwise direction) and a housing for accommodating the same.

Meanwhile, there is a risk that the battery cells 10 may overheat and ignite due to a short circuit. When the battery cell 10 ignites, heat, flame and gas generated by vaporization of the electrolyte solution charged inside the pouch 100 may be discharged from the battery cell 10. Additionally, flame and high-temperature gas resulting from the ignition of the battery cell 10 may spread to other adjacent battery cells 10, causing serial ignition.

In addition, a plurality of the battery modules may be integrated to form a battery pack. In such battery pack, the battery modules may be arranged in a manner that lengthwise ends thereof face each other. Here, flame and high-temperature gas generated from inside the battery module are mainly discharged through the terrace portion 100a where the electrode lead 101 protrudes. Venting through the terrace portion 100a as described above may cause thermal propagation between modules and ignition at the pack level.

Accordingly, a structure of a battery module capable of preventing thermal propagation between the battery cells and preventing discharge of flames and high-temperature gases through front and rear ends is necessary.

### [DETAILED DESCRIPTION OF THE INVENTION]

### [TECHNICAL PROBLEM]

In order to solve above-described problems of prior art, it is an object of the present invention to provide a structure of a battery module wherein the venting of the battery cell may be guided in a specific direction. More specifically, it is an object of the present invention to provide a structure of a battery module wherein the venting of the battery cell may be directed toward a sealed portion provided at one heightwise end.

It is another object of the present invention to provide a structure of a battery module wherein thermal propagation between battery cells is delayed or prevented, and assembly clearance in the battery cell stack is minimized.

It is yet another object of the present invention to provide a structure of a battery module wherein the venting of the battery cell is not directed toward electrode leads and/or other adjacent battery modules.

In addition, the present invention is to achieve the above-described objects without changing the structure of the battery cell as much as possible.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a battery module containing a battery cell laminate comprising a plurality of pouch-type battery cells and a plurality of compressible pads stacked therein in widthwise direction, wherein each of the plurality of pouch-type battery cells is provided with a terrace portion at each of two lengthwise ends thereof, the terrace portion being thinner than other portions thereof, and each of the plurality of compressible pads is provided with a packing portion at each of two lengthwise ends thereof, the packing portion protruding in one side or two sides of the widthwise direction and being in contact with the terrace portion in the widthwise direction.

The battery cell may be a pouch sheet folded in half to accommodate the electrode assembly, and three sides except the folded portion may be fusion-sealed. Accordingly, the terrace portion may be provided at two lengthwise ends of the battery cell, and a sealed portion may be provided on the opposite side of the folded portion of the battery cell.

An electrode lead electrically connecting the electrode assembly to the outside may protrude through the terrace portion. The electrode lead may be fused to the pouch sheet with a lead film covering two thicknesswise end surfaces interposed between the electrode lead and the pouch sheet.

The packing portion may extend in a heightwise direction. Preferably, the packing portion may extend to correspond to an entire section of heightwise direction of the terrace portion.

In an embodiment of the present invention, at least one compressible pad may be stacked at two widthwise ends of each of the plurality of pouch-type battery cells. Here, the packing portion provided at the compressible pad interposed between any two of the plurality of pouch-type battery cells may protrude in widthwise direction of the battery cell laminate, and the packing portion provided at the outermost compressible pad located at each of the two widthwise ends of the battery cell laminate may protrude inward in the widthwise direction of the battery cell laminate.

In another embodiment of the present invention, a first compressible pad may be stacked at one widthwise end of each of the plurality of pouch-type battery cells wherein the first compressible pad has a packing portion protruding toward the other widthwise side thereof, and a second compressible pad may be stacked at the other widthwise end of each of the plurality of pouch-type battery cells wherein the second compressible pad has a packing portion protruding toward one widthwise side thereof.

The thickness before compression of the compressible pad interposed between any two of the plurality of pouch-type battery cells may be greater than the distance in widthwise direction between the terrace portions of any two neighboring pouch-type battery cells. That is, the compressible pad may be compressed and interposed between the terrace portions of the two battery cells in assembled battery module. As a result, the compressible pad may apply pressure to the terrace portion and be in close contact with the terrace portion.

The battery cell laminate may be compressible as a whole in widthwise direction thereof as each of the plurality of compressible pads is compressed in widthwise direction thereof. Here, the width of the battery cell laminate before compression may be greater than that of the battery cell laminate after the assembly thereof. That is, the battery cell laminate may be accommodated in a housing of assembled battery module in a state with the compressible pad compressed in the widthwise direction and the entire battery cell laminate compressed in the widthwise direction.

The battery module may further include a pressing means pressing two widthwise end surfaces of the battery cell laminate inward in widthwise direction.

In an embodiment of the present invention, the pressing means may include a clip bus bar frame connected to one lengthwise end of the battery cell laminate. The clip bus bar frame may include: a main body corresponding to the lengthwise end surface of the battery cell laminate; and a pair of pressing portions provided at each of two widthwise ends of the main body. The pair of pressing portions may protrude inward in lengthwise direction of the battery cell laminate from two widthwise ends of the main body.

Here, the width of the battery cell laminate before compression may be greater than the distance in widthwise direction between the pair of pressing portions. Accordingly, by mounting the clip bus bar frame at the battery cell laminate, the packing portion may be compressed between the pair of pressing portions and be in close contact with the terrace portion.

In another embodiment of the present invention, the pressing means may include a clip housing accommodating the battery cell laminate. The clip housing may have one open heightwise end and include a pair of side walls provided at the two widthwise ends thereof. The clip housing may have a U-shaped cross-section with one open heightwise end and open front and rear ends.

Here, the width of the battery cell laminate before compression may be greater than the distance in widthwise direction between the pair of side walls. Accordingly, as the battery cell laminate is accommodated in the clip housing, the packing portion may be compressed between the pair of side walls and be in close contact with the terrace portion.

The compressible pad may include a heat-resistant material or a fire-resistant material.

The present invention also provides a structure of a battery pack including the battery module, and a structure of a vehicle including the battery pack.

The battery module may have a predetermined venting hole on the top surface of the housing thereof. High-temperature gas and flame discharged from the battery cell may be discharged upward from the battery module through the venting hole.

In order to increase the charge and discharge capacity and/or power, a plurality of the battery modules may be connected to each other in series and/or parallel to form one battery pack. Additionally, the battery pack may be built into the vehicle as a power source for the vehicle.

The battery pack may include a venting passage and a venting device to discharge high-temperature gas and flame from the battery module in upward direction. The venting device may rupture the battery pack when the internal pressure thereof exceeds a predetermined level, thereby enabling the discharge of the thermal energy and gas.

### [ADVANTTAGEOUS EFFECTS]

The present invention may provide a structure of a battery module wherein the venting of the battery cell is guided in a specific direction by the technical solution described above. More specifically, the present invention may provide a structure of a battery module wherein the venting of the battery cell may be directed toward a sealed portion provided at one heightwise end.

The present invention may also provide a structure of a battery module wherein thermal propagation between battery cells is delayed or prevented, and assembly clearance in the battery cell stack is minimized.

The present invention may advantageously provide a structure of a battery module wherein the venting of the battery cell is not directed toward electrode leads and/or other adjacent battery modules.

In addition, the present invention is to achieve the above-described effects without changing the structure of the battery cell.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate the structure of a pouch-type battery cell.
FIGS. 3 and 4 illustrate the structure of a battery cell laminate with battery cells stacked therein.
FIGS. 5 and 6 illustrate a structure of a battery cell laminate according to an embodiment of the present invention.
FIGS. 7 to 10 illustrate cross-sections of a battery cell laminate according to an embodiment of the present invention.
FIGS. 11 to 13 illustrate a clip bus bar frame mounted on the battery cell laminate of FIG. 5 according to an embodiment of the present invention.
FIGS. 14 and 15 illustrate a cross-section of an assembly of a battery cell laminate and a clip bus bar frame according to an embodiment of the present invention.
FIG. 16 illustrates a venting path in a battery module according to an embodiment of the present invention.
FIGS. 17 to 20 illustrate a structure of a battery cell laminate according to another embodiment of the present invention.
FIGS. 21 to 24 illustrate the battery cell laminate of FIG. 17 accommodated in a clip housing according to another embodiment of the present invention.
FIGS. 25 and 26 illustrate a structure of a battery pack containing a battery module and a vehicle containing the battery pack according to an embodiment of the present invention.

### [DESCRIPTION OF REFERENCE NUMERALS]

1: battery cell laminate
   10: battery cell
      100: pouch
         100a: terrace portion
         100b: sealed portion
         100c: folded portion
      101: electrode lead
      102: lead film
   11: compressible pad
      11A: first compressible pad
      11B: second compressible pad
      110: packing portion
         110a: first packing portion
         110b: second packing portion
2: clip bus bar frame
   20: bus bar
   21: main body
      210: slit
   22: pressing portion
3: clip housing
   30: bottom plate
   31: side wall
M: battery module
P: battery pack
V: vehicle
X: longitudinal/forward/backward direction
Y: width direction/left and right direction
Z: height direction/up and down direction

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, a preferred embodiment of the present invention will be described with reference to the accompanying drawings.

### [STRUCTURES OF POUCH-TYPE BATTERY CELL AND BATTERY CELL LAMINATE]

FIGS. 1 and 2 illustrate the structure of a pouch-type battery cell. Referring to FIGS. 1 and 2, a pouch-type battery cell 10 generally includes an electrode assembly, and a pouch 100 manufactured by folding sheet in half with three sides except the folded portion 100c to surround and seal the electrode assembly thereby accommodate the electrode assembly. The sealing may be achieved by a fusion sealing.

The battery cell 10 substantially has a rectangular parallelepiped shape extending: in a lengthwise direction (X, front and rear directions) parallel to the longest side thereof; in a thicknesswise direction (Y, widthwise direction, left and right directions) parallel to the shortest side thereof; and in a heightwise direction (Z, upward and downward directions) intersecting the lengthwise direction and the thicknesswise direction.

A sealed portion 100b is provided at one heightwise end of the battery cell 10, which is the opposite side wherein the folded portion 100c is provided. The sealed portion 100b may be additionally sealed by folding or attaching tape.

A terrace portion 100a, which is thinner than the other portions, may be provided at each of the two lengthwise ends of the battery cell 10 excluding the folded portion 100c and the sealed portion 100b.

An electrode lead 101 that electrically connects the electrode assembly to the outside may protrude and extend from the pouch 100. The electrode lead 101 may protrude through the terrace portion 100a.

The electrode lead 101 may include a fusible lead film 102 covering two thicknesswise end surfaces thereof. The lead film 102 is interposed between the pouch 100 and the electrode lead 101 and is fused to seal the portion of the terrace portion 100a through which the electrode lead 101 passes.

FIGS. 3 and 4 illustrate the structure of a battery cell laminate in which battery cells are stacked. Referring to FIGS. 3 and 4, a plurality of battery cells 10 may be connected in series and/or parallel to form one battery module in order to increase capacity and/or voltage.

The battery module may include a battery cell laminate 1 in which the plurality of battery cells 10 are stacked in thicknesswise direction.

Meanwhile, since the battery cell laminate 1 is manufactured by stacking the plurality of battery cells 10, there is a possibility that the tolerances are accumulated and a large tolerance occurs in the widthwise direction.

Additionally, the battery cell 10 has a risk of ignition due to short circuit, shock, heating, etc. When the battery cell 10 ignites, the battery cell 10 is heated to a high temperature, and high-temperature gas and flame may be generated from the inside of the pouch 100. In the battery cell laminate 1, as the battery cells 10 are stacked facing each other over a large area, there is a high risk of thermal propagation between cells, which causes serial ignition between cells, resulting in module-level ignition.

Accordingly, when constructing the battery cell laminate 1, the problems of tolerance and thermal propagation described above are solved by interposing a compressible pad containing heat-resistant and/or fire-resistant material between the battery cells 10. There have been attempts to solve this problem in the past.

### [FIRST EMBODIMENT]

### [STRUCTURE OF BATTERY CELL LAMINATE INCLUDING COMPRESSIBLE PAD]

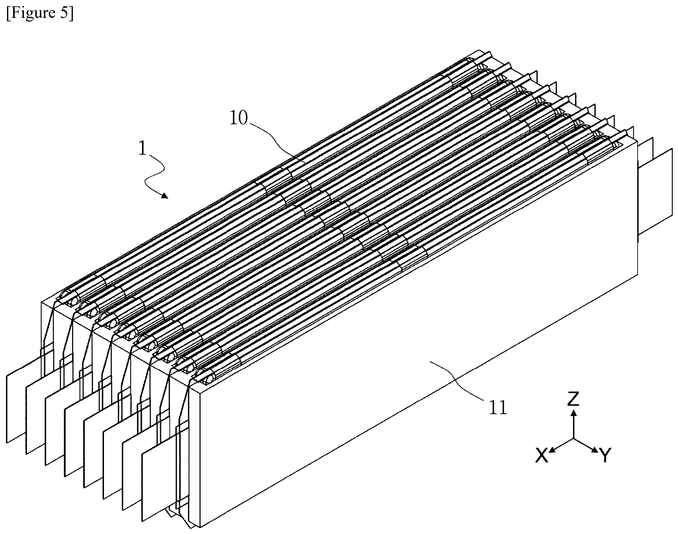

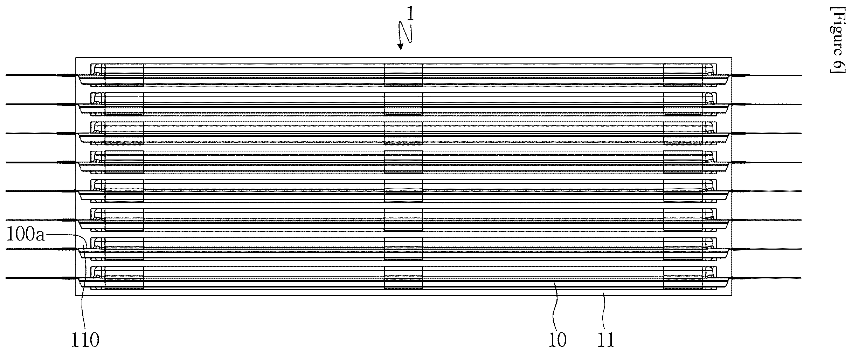

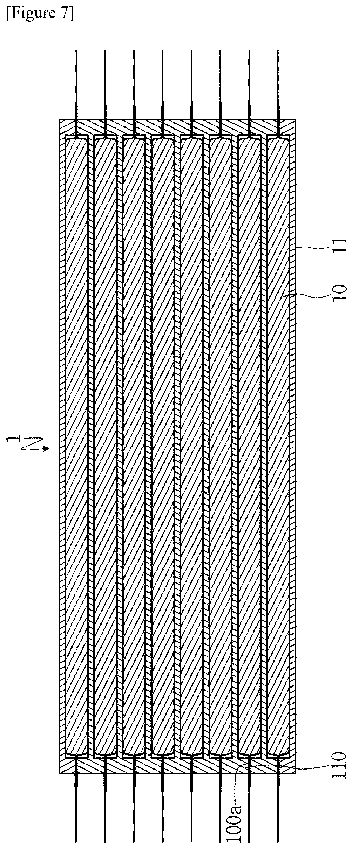

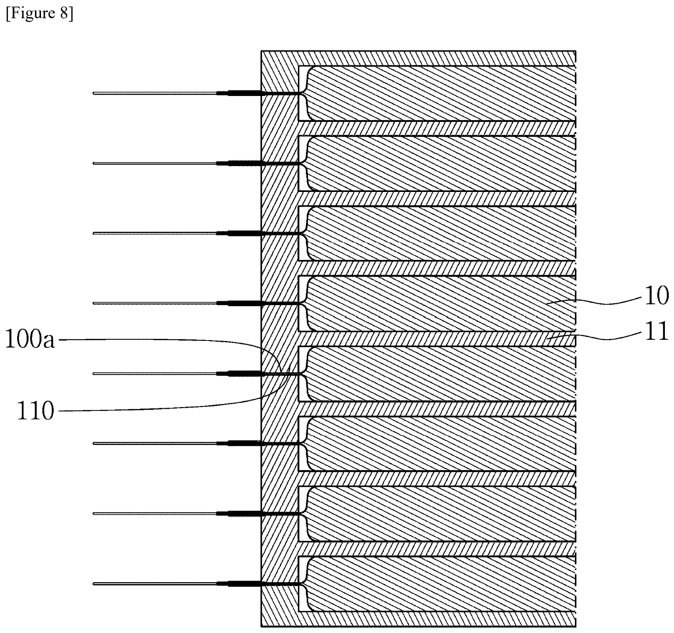

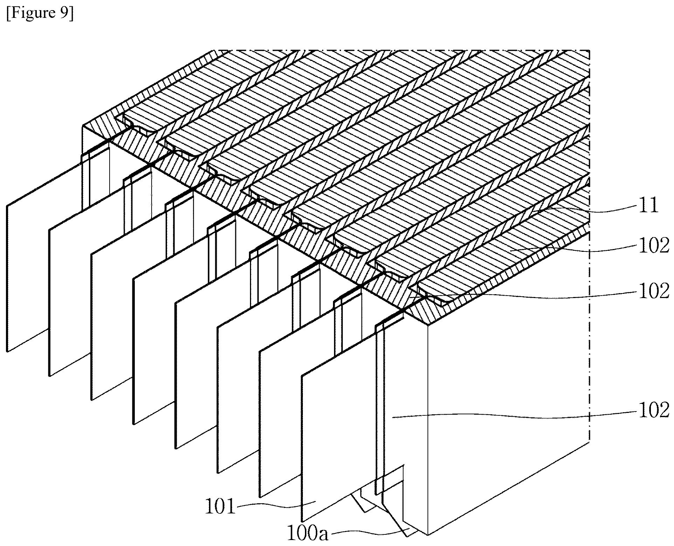

FIGS. 5 and 6 illustrate a structure of a battery cell laminate according to an embodiment of the present invention, and FIGS. 7 to 10 illustrate cross-sections of a battery cell laminate according to an embodiment of the present invention. Referring to FIGS. 5 to 10, the battery cell laminate 1 according to an embodiment of the present invention may be manufactured by stacking a plurality of battery cells 10 along with a compressible pad 11 therebetween.

The compressible pad 11 may include compressible material. The compressible material may be a material whose volume shrinks in response to pressure. Additionally, the compressible material may have a property of elastically restoring to its original volume from compressed state. Since the compressible pad 11 includes a compressible material, the battery cell laminate 1 may be compressed in the widthwise direction thereof and may have elastic restoring force in a compressed state. Accordingly, the battery cell laminate 1 according to an embodiment of the present invention may be accommodated in a predetermined housing while being in a compressed state such that the width thereof is equal to the inner width of the predetermined housing. As a result, the assembly tolerance of the battery module may be reduced.

Referring to FIG. 6, the compressible pad 11 may be interposed between the battery cells 10 or may form the outermost layer of the battery cell laminate 1. Preferably, the compressible pad 11 may be stacked at least one on two widthwise end surfaces of each battery cell 10. That is, each battery cell 10 may be interposed between two compressible pads 11. Alternatively, at least one compressible pad 11 may be interposed between each pair of adjacent battery cells 10. That is, at least one compressible pad 11 interposed between two neighboring battery cells 10.

The compressible pad 11 preferably includes heat-resistant material and/or fire-resistant material. Additionally, the compressible pad 11 preferably includes an insulating material. Accordingly, the compressible pad 11 may delay or prevent thermal propagation in widthwise direction between the battery cells 10. In addition, this allows the compressible pad 11 to delay or prevent thermal propagation between the battery cells 10 without melting or burning even when one of the battery cells 10 ignites.

A packing portion 110 that is thicker than the other portions may be provided at the two lengthwise ends of the compressible pad 11. The packing portion 110 may be a portion of each of the two lengthwise ends of the compressible pad 11 that protrudes in widthwise direction.

Referring to FIGS. 7 to 9, the packing portion 110 may be provided to be in contact with the terrace portion 100a in the battery cell laminate 1 in a widthwise direction. Preferably, the packing portion 110 may be provided to apply pressure to the terrace portion 100a so as to be in close contact with the terrace portion 100a.

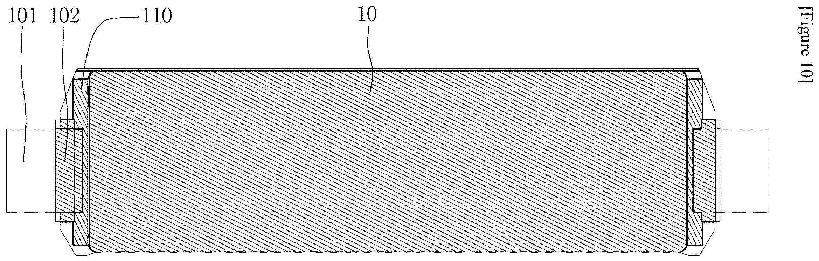

Referring to FIG. 10, the packing portion 110 may extend in heightwise direction. Preferably, the packing portion 110 may extend to correspond to the entire height of the terrace portion 100a. Accordingly, the packing portion 110 may delay thermal propagation in front and rear directions when the battery cell 10 ignites.

According to an embodiment of the present invention, the compressible pad 11 may be stacked on each of the two widthwise end surfaces of the battery cell 10, and the compressible pad 11 may protrude in widthwise direction. The compressible pad 11 may be provided with the packing portion 110 extending in heightwise direction to correspond to the entire height of the terrace portion 100a. Here, the packing portion 110 provided at the compressible pad 11 interposed between two neighboring battery cells 10 may protrude from two widthwise end surfaces thereof, and the packing portion 110 provided at the compressible pad 11 disposed at the outermost side of the battery cell laminate 1 may protrude inward in widthwise direction. The compressible pad 11 may include a compressible, heat-resistant and fire-resistant material, and may also include an insulating material.

In addition, according to an embodiment of the present invention, the thickness before compression of the packing portion 110 of the compressible pad 11 interposed between two neighboring battery cells 10 may be greater than the distance in widthwise direction between terrace portions 100a of any two neighboring battery cells. That is, in assembled state, the packing portion 110 may be interposed in a compressed state between the terrace portions 100a of the two battery cells 10 to be pressed and in close contact with the terrace portion 100a. The battery cell laminate 1 may be compressible as a whole in widthwise direction thereof as each of the plurality of compressible pads 11 is compressed in widthwise direction thereof, and the width of the battery cell laminate 1 before compression may be greater than that of the battery cell laminate after the assembly thereof. That is, the battery cell laminate 1 may be accommodated in a housing of assembled battery module in a compressed state in the widthwise direction.

### [PRESSING STRUCTURE OF PACKING PORTION INCLUDING CLIP BUS BAR FRAME]

The battery module may include a pressing means pressing two widthwise end surfaces of the battery cell laminate 1 inward in widthwise direction. The pressing means applies pressure to a predetermined section of the two lengthwise ends of the battery cell laminate 1 inward in a widthwise direction from two widthwise end surfaces to compress the packing portion 110 such that the packing portion 110 is in close contact with the terrace portion 100a.

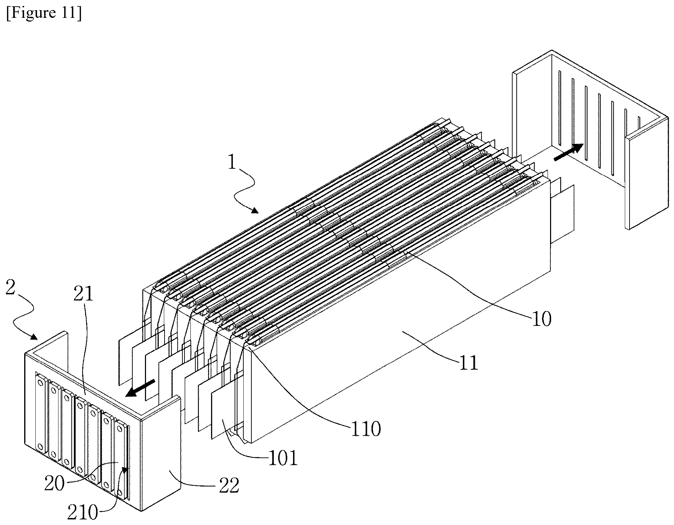

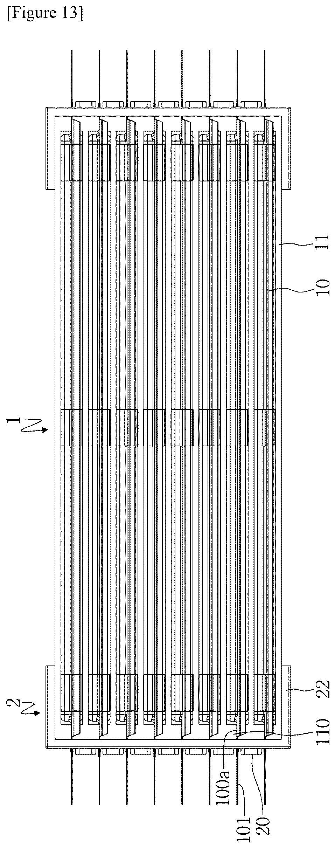

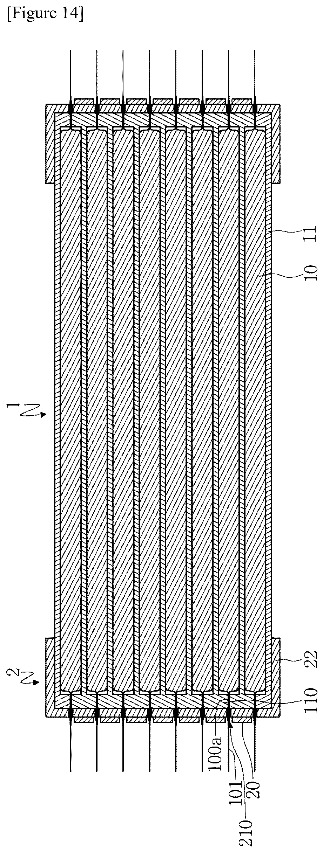

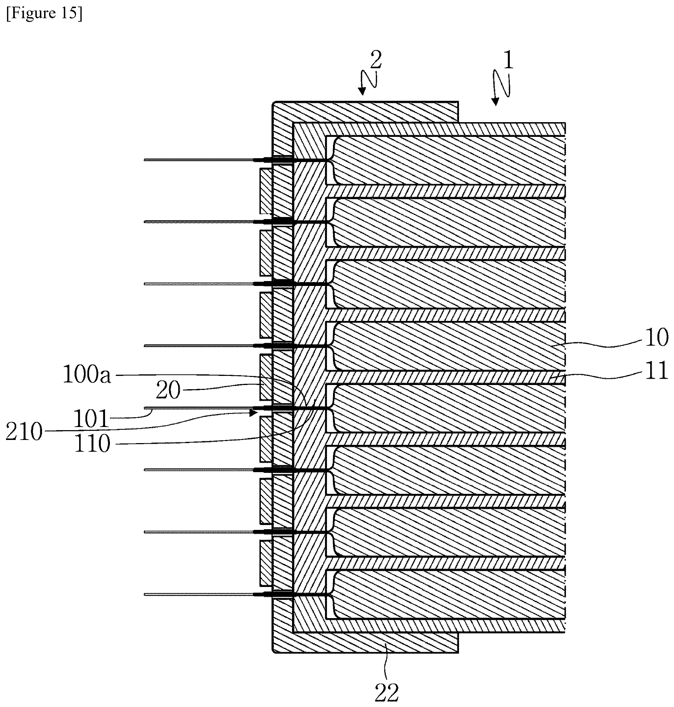

FIGS. 11 to 13 illustrate a clip bus bar frame mounted on the battery cell laminate of FIG. 5 according to an embodiment of the present invention, and FIGS. 14 and 15 illustrate a cross-section of an assembly of a battery cell laminate and a clip bus bar frame according to an embodiment of the present invention. Referring to FIGS. 11 to 15, the pressing means according to an embodiment of the present invention may include a clip bus bar frame 2 connected to one lengthwise end of the battery cell laminate 1. Another clip bus bar frame 2 connected to the other lengthwise end of the battery cell laminate 1 may be provided as a pair.

Referring to FIG. 11, the clip bus bar frame 2 may include a main body 21 and a pressing portion 22. The pressing portion 22 may be provided as a pair such that the two widthwise end surfaces of the battery cell laminate 1 are pressed inward in the widthwise direction, respectively. Here, the main body 21 may connect the pair of pressing portions 22. That is, the pressing portion 22 may be provided as a pair on two widthwise ends of the main body 21.

The main body 21 may correspond to the lengthwise end surface of the battery cell laminate 1. Here, the pressing portion 22 may protrude inward from the two widthwise ends of the main body 21 in the lengthwise direction of the battery cell laminate 1. That is, the clip bus bar frame 2 may have a box shape with open heightwise ends and open side surfaces.

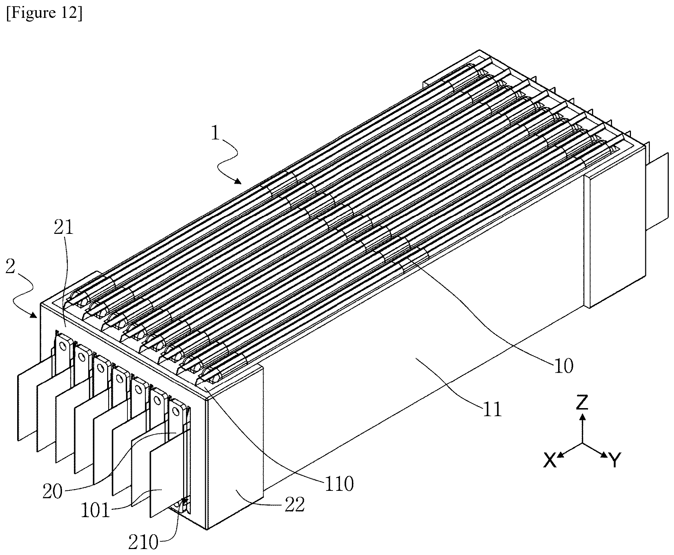

Referring to FIGS. 11 and 12, the main body 21 may be provided with a slit 210 through which the electrode lead 101 passes. Additionally, a bus bar 20 to which the electrode lead 101 is connected may be provided on the lengthwise outer side surface of the main body 21. Through the bus bar 20, the electrode leads 101 of the same polarity and/or different polarities may be electrically connected to each other.

Referring to FIGS. 14 and 15, the distance in widthwise direction between the pair of pressing portions 22, i.e. the inner width of the pressing portion 22 may be smaller than the width of the battery cell laminate 1 before compression. Accordingly, when the clip bus bar frame 2 is connected to the lengthwise end of the battery cell laminate 1, the packing portion 110 may be compressed in the widthwise direction to be in close contact with the terrace portion 100a.

According to a modified example, the compressible pad may not be provided on the two outermost widthwise end surfaces of the battery cell laminate. Here, the pressing portion may be provided with a protruding portion corresponding to and in close contact with the terrace portion of the outermost battery cell. For example, the protruding portion may protrude inward in the widthwise direction from the inner side surface of the pressing portion, and may extend in the heightwise direction to correspond to the entire height of the terrace portion.

### [GUIDING DIRECTION OF VENTING AND PREVENTING THERMAL RUNAWAY]

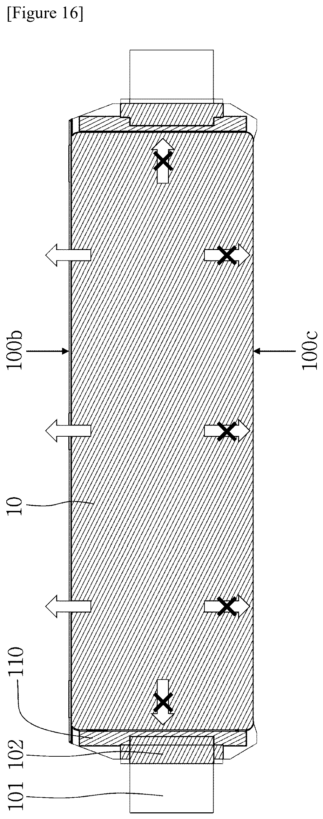

FIG. 16 illustrates a venting path in a battery module according to an embodiment of the present invention. Referring to FIG. 16, when the battery cell 10 ignites, the high-temperature gas and flame generated inside the pouch 100 are discharged mainly through the terrace portion 100a and/or the sealed portion 100b. This is because, unlike the folded portion 100c, the sealing of the terrace portion 100a and the sealed portion 100b may be melted and released by heat. However, according to an embodiment of the present invention, the packing portion 110 is pressed and brought into close contact along the entire height of the terrace portion 100a such that the sealing of the terrace portion 110 is maintained even when the fusion sealing of the terrace portion 100a is melted. Accordingly, in the battery module according to an embodiment of the present invention, venting due to ignition of the battery cell 10 may occur only toward the sealed portion 100b.

Additionally, the compressible pad 11 according to an embodiment of the present invention may effectively prevent thermal propagation between cells by including an insulating material.

Therefore, according to an embodiment of the present invention, the heat may be prevented from propagating to other neighboring battery cells 10 due to the insulating properties of the compressible pad 11 even when one battery cell 10 ignites, and thermal propagation to other battery modules placed in the front, rear, or sides of the battery module may also be prevented as the venting is directed upward such that thermal runaway due to serial ignition at the module level and the pack level may be delayed or prevented.

### [SECOND EMBODIMENT]

### [STRUCTURE OF BATTERY CELL LAMINATE INCLUDING COMPRESSIBLE PAD]

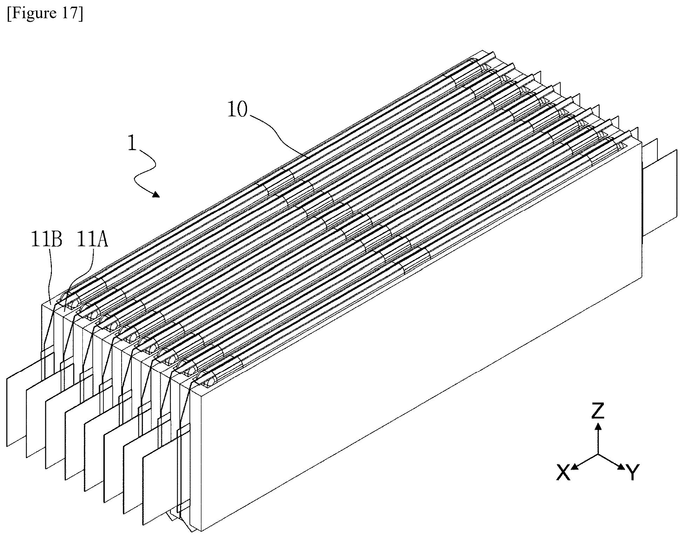

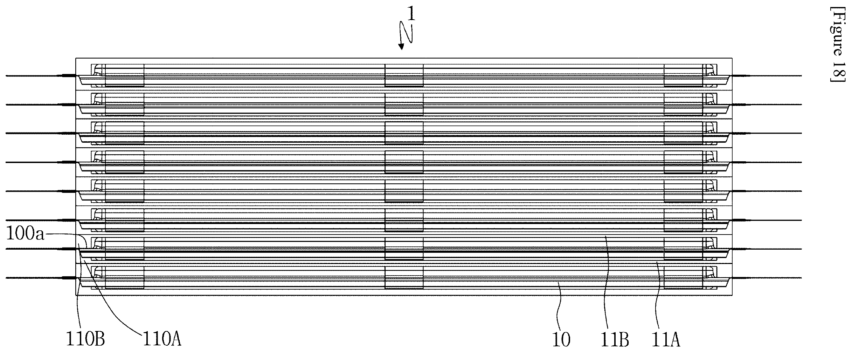

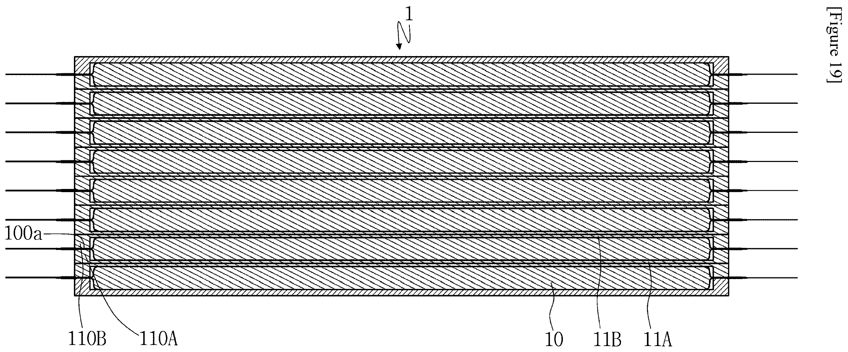

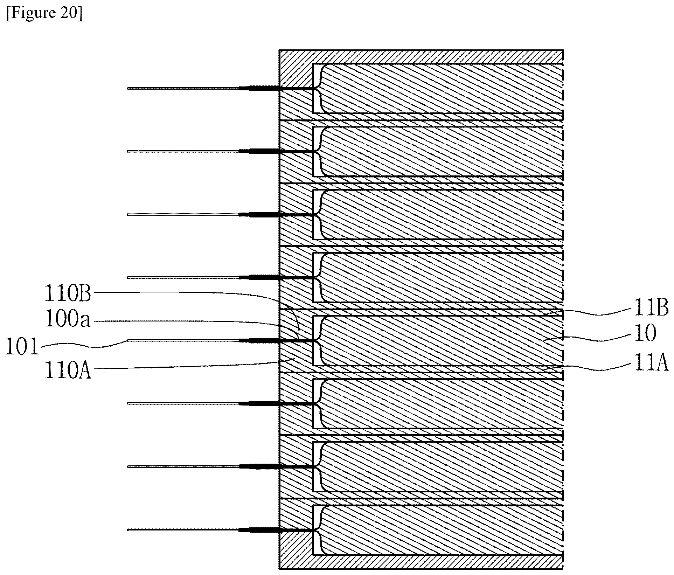

FIGS. 17 to 20 illustrate a structure of a battery cell laminate according to another embodiment of the present invention. Referring to FIGS. 17 to 20, according to another embodiment of the present invention, a first compressible pad 11A may be stacked at one widthwise end of each of the plurality of battery cells 10 wherein the first compressible pad 11A has a packing portion 110 protruding toward the other widthwise side thereof, and a second compressible pad 11B may be stacked at the other widthwise end of each of the plurality of battery cells 10 wherein the second compressible pad 11B has a packing portion 110 protruding toward one widthwise side thereof. That is, the battery cell laminate 1 may be manufactured by stacking a plurality of units each of which includes one battery cell 10 and a pair of compressible pads 11 stacked on two widthwise ends thereof, respectively. Each of the pair of compressible pads 11 may have a packing portion 110 protruding inward in widthwise direction.

According to the second embodiment, unlike in the first embodiment, it is not necessary to separately produce the outermost compressible pad and the intervening compressible pad, and the battery module according to the present invention may be constructed simply by stacking a plurality of units of the same structure regardless of the number of battery cells constituting one battery cell laminate.

### [PRESSING STRUCTURE OF PACKING PORTION INCLUDING CLIP HOUSING]

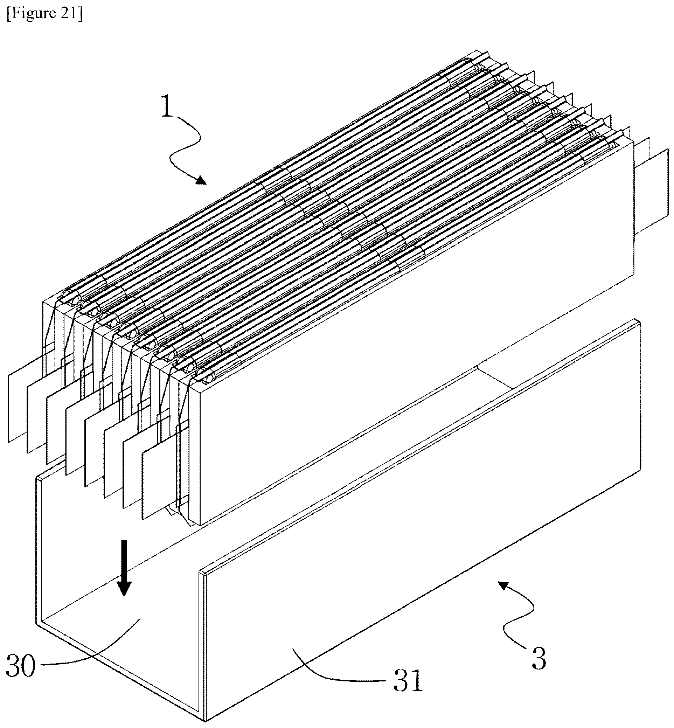

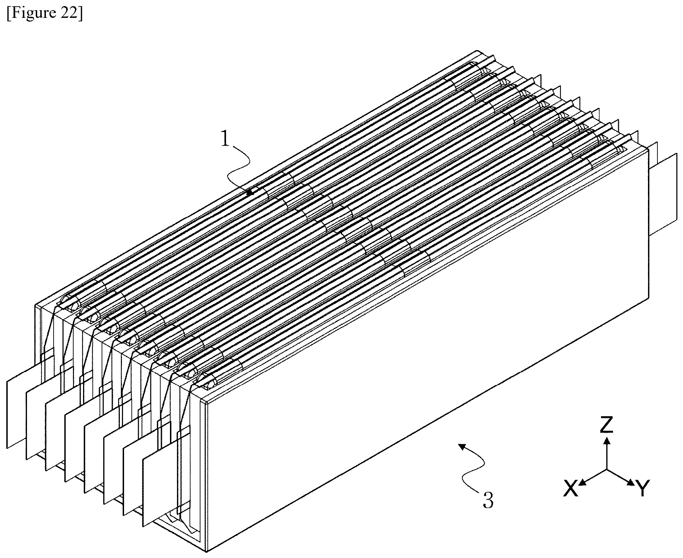

FIGS. 21 to 24 illustrate the battery cell laminate of FIG. 17 accommodated in a clip housing according to another embodiment of the present invention. Referring to FIGS. 21 to 24, the pressing means according to another embodiment of the present invention may include a clip housing 3 that accommodates the battery cell laminate 1.

Referring to FIG. 21, the clip housing 3 may include a bottom plate 30 and side walls 31. A pair of side walls 31 may be provided to press the two widthwise end surfaces of the battery cell laminate 1 inward in widthwise direction. Here, the bottom plate 30 may connect the pair of side walls 31. That is, the pair of side walls 31 may be provided on the two widthwise ends of the bottom plate 30.

The bottom plate 30 may correspond to the bottom surface of the battery cell laminate 1. Here, the side walls 31 may protrude upward from the two widthwise ends of the bottom plate 30. That is, the clip housing 3 may substantially form a box shape with open lengthwise ends and open upper end.

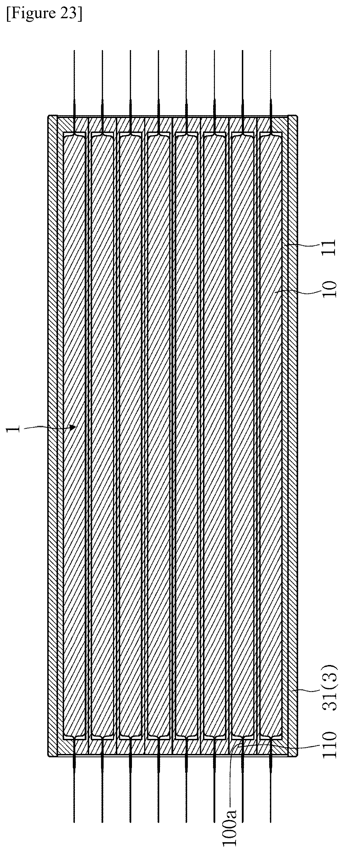

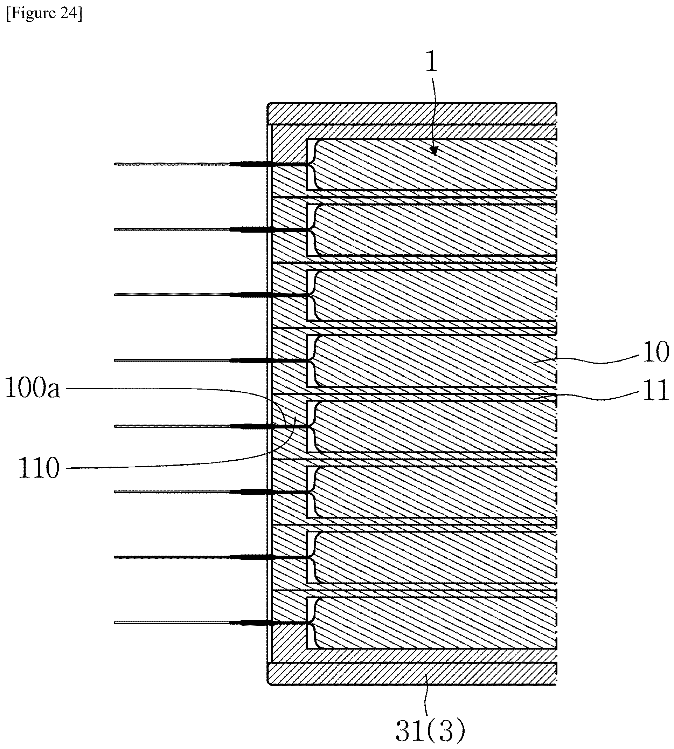

Referring to FIGS. 23 and 24, the distance in the widthwise direction between the pair of side walls 31, i.e., the inner width of the side wall 31, may be smaller than the width of the battery cell laminate 1 before compression. Accordingly, when the clip housing 3 accommodates the battery cell laminate 1, the packing portion 110 may be compressed in the widthwise direction and pressed against and in close contact with the terrace portion 100a.

According to the second embodiment, the pressing means according to the present invention may be advantageously implemented using a housing having a U-frame structure, which has been widely used as a housing for a battery module accommodating a battery cell laminate, without requiring a separate pressing means.

According to a modified example, the compressible pad may not be provided on the outermost two widthwise end surfaces of the battery cell laminate. Here, at the lengthwise end of the side wall, a protruding portion may be provided that corresponds to the terrace portion of the outermost battery cell and is in close contact with the terrace portion. For example, the protruding portion may protrude inward in widthwise direction from the inner side surface of the side wall, and may extend in the heightwise direction to correspond to the entire height of the terrace portion.

### [THIRD EMBODIMENT]

### [STRUCTURES OF BATTERY MODULE, BATTERY PACK AND VEHICLE INCLUDING THE SAME]

The present invention also provides a structure of a battery pack including the battery module, and a structure of a vehicle including the battery pack.

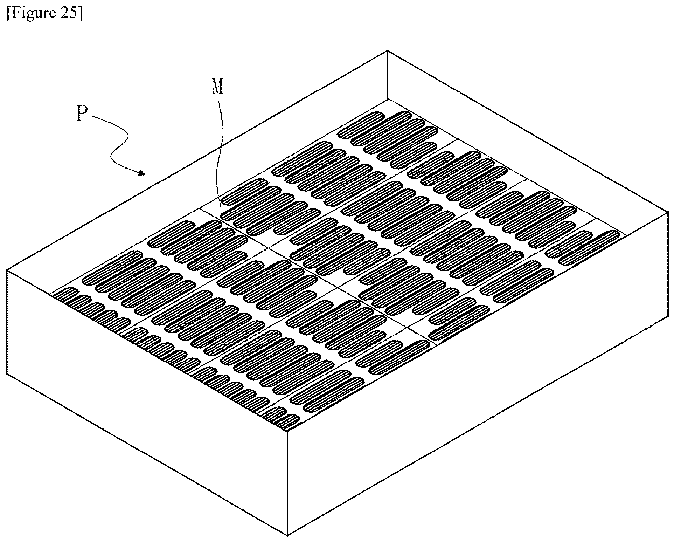

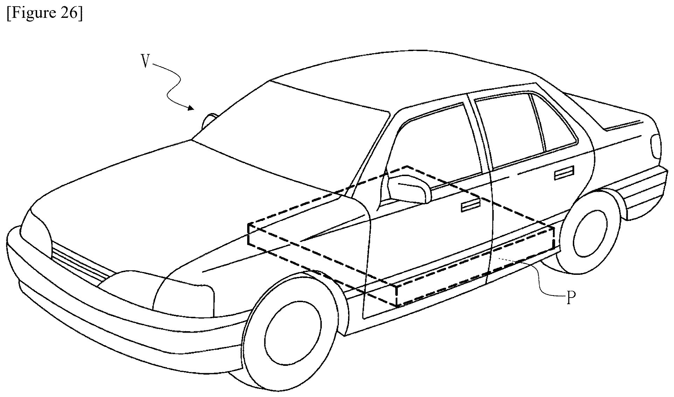

FIGS. 25 and 26 illustrate a structure of a battery pack containing a battery module and a vehicle containing the battery pack according to an embodiment of the present invention. Referring to FIGS. 25 and 26, a battery module M may have a predetermined venting hole on the top surface of the housing thereof. High-temperature gas and flame discharged from the battery cell may be discharged upward from the battery module M through the venting hole.

In order to increase the charge and discharge capacity and/or power, a plurality of the battery modules M may be connected to each other in series and/or parallel to form one battery pack P. Additionally, the battery pack P may be built into a vehicle V as a power source for the vehicle V.

The battery pack P may include a venting passage and a venting device to discharge high-temperature gas and flame from the battery module M in upward direction. The venting device may rupture the battery pack P when the internal pressure thereof exceeds a predetermined level, thereby enabling the discharge of the thermal energy and gas.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module containing a battery cell laminate comprising a plurality of pouch-type battery cells and a plurality of compressible pads stacked therein in widthwise direction,
wherein each of the plurality of pouch-type battery cells is provided with a terrace portion at each of two lengthwise ends thereof, the terrace portion being thinner than other portions thereof, and
each of the plurality of compressible pads is provided with a packing portion at each of two lengthwise ends thereof, the packing portion protruding in one side or two sides of the widthwise direction and being in contact with the terrace portion in the widthwise direction.

2. The battery module of claim 1, wherein the packing portion extends in a heightwise direction.

3. The battery module of claim 2, wherein the packing portion extends to correspond to an entire section of heightwise direction of the terrace portion.

4. The battery module of claim 1, wherein at least one compressible pad is stacked at two widthwise ends of each of the plurality of pouch-type battery cells.

5. The battery module of claim 4, wherein a packing portion provided at a compressible pad interposed between any two of the plurality of pouch-type battery cells protrudes in widthwise direction of the battery cell laminate, and
a packing portion provided at an outermost compressible pad located at each of two widthwise ends of the battery cell laminate protrudes inward in the widthwise direction of the battery cell laminate.

6. The battery module of claim 1, wherein a first compressible pad is stacked at one widthwise end of each of the plurality of pouch-type battery cells, the first compressible pad having a packing portion protruding toward other widthwise side thereof, and
a second compressible pad is stacked at other widthwise end of each of the plurality of pouch-type battery cells, the second compressible pad having a packing portion protruding toward one widthwise side thereof.

7. The battery module of claim 1, wherein a thickness before compression of a compressible pad interposed between any two of the plurality of pouch-type battery cells is greater than a distance in widthwise direction between terrace portions of any two neighboring pouch-type battery cells.

8. The battery module of claim 7, wherein the battery cell laminate is compressible as a whole in widthwise direction thereof as each of the plurality of compressible pads is compressible in widthwise direction thereof, and
a width of the battery cell laminate before compression is greater than that of the battery cell laminate after assembly of the battery module.

9. The battery module of claim 8, further comprising: a pressing means pressing two widthwise end surfaces of the battery cell laminate inward in widthwise direction.

10. The battery module of claim 9, wherein the pressing means comprises a clip bus bar frame connected to one lengthwise end of the battery cell laminate.

11. The battery module of claim 10, wherein the clip bus bar frame comprises:
a main body corresponding to the lengthwise end surface of the battery cell laminate; and
a pair of pressing portions provided at each of two widthwise ends of the main body.

12. The battery module of claim 11, wherein the pair of pressing portions protrudes inward in lengthwise direction of the battery cell laminate from two widthwise ends of the main body.

13. The battery module of claim 12, wherein a width of the battery cell laminate before compression is greater than a distance in widthwise direction between the pair of pressing portions.

14. The battery module of claim 9, wherein the pressing means comprises a clip housing accommodating the battery cell laminate.

15. The battery module of claim 14, wherein the clip housing has one open heightwise end and comprises a pair of side walls provided at two widthwise ends thereof.

16. The battery module of claim 15, wherein the clip housing has one open heightwise end and open front and rear ends.

17. The battery module of claim 15, wherein a width of the battery cell laminate before compression is greater than a distance in widthwise direction between the pair of side walls.

18. The battery module of claim 1, wherein the compressible pad comprises a heat-resistant material or a fire-resistant material.

19. A battery pack comprising a battery module of any one of claims 1 to 18.

20. A vehicle comprising a battery pack of claim 18.
